## Europäisches Patentamt
## European Patent Office
## Office européen des brevets

(11) Veröffentlichungsnummer: **0 056 979**
**B1**

(12) # EUROPÄISCHE PATENTSCHRIFT

(45) Veröffentlichungstag der Patentschrift:
30.04.86

(51) Int. Cl.⁴: **G 09 B 11/00**

(21) Anmeldenummer: **82100381.1**

(22) Anmeldetag: **21.01.82**

(54) Schreib- und/oder Zeichengerät sowie Verwendung desselben als Lernspielzeug.

(30) Priorität: **24.01.81 DE 3102378**
**17.10.81 DE 3141338**

(73) Patentinhaber: **Gertels, Franz, Diegeringerstrasse 12,**
**D-7886 Murg 2 Niederhof (DE)**

(43) Veröffentlichungstag der Anmeldung:
**04.08.82 Patentblatt 82/31**

(72) Erfinder: **Gertels, Franz, Diegeringerstrasse 12,**
**D-7886 Murg 2 Niederhof (DE)**

(45) Bekanntmachung des Hinweises auf die Patenterteilung:
**30.04.86 Patentblatt 86/18**

(74) Vertreter: **Lück, Gert, Dr. rer. nat., Im See 6,**
**D-7891 Küssaberg 1 (DE)**

(84) Benannte Vertragsstaaten:
**DE FR GB IT**

(56) Entgegenhaltungen:
**DE - A - 2 335 730**
**GB - A - 1 229 753**
**US - A - 3 584 385**
**US - A - 3 731 402**
**US - A - 3 861 066**

LIBER, STOCKHOLM 1986

## Beschreibung

Bei der Erfindung wird ausgegangen von einem Schreib- und/ oder Zeichengerät nach dem Oberbegriff des Patentanspruchs 1.

Mit diesem Oberbegriff nimmt die Erfindung auf einen Stand der Technik von Schreib- und/oder Zeichengeräten Bezug, wie er aus der GB-A-1 229 753 bekannt ist. Dort weist eine mit einem Handgriff versehene Schablone an der Peripherie zwei Vorsprünge auf, die in dazu passende Oeffnungen in einer ebenen Unterlageplatte passen. Die Unterlageplatte ist zweiteilig ausgeführt, wobei ein peripherer Teil zum Festklemmen des Zeichenpapiers dient. Dieser periphere Teil der Unterlageplatte wird mittels Schraubzwingen an einer Trägerplatte befestigt. Nachteilig ist, dass das Zeichenpapier zwischen seinem zentralen und peripheren Teil geknickt werden muss und dass das Zeichengerät relativ viele Einzelteile aufweist und somit aufwendig in der Herstellung ist und sich kaum als Lernspielzeug zur Vorschulerziehung von Kindern oder als Lernhilfe für Sonderschulen eignet.

Als Schreib- und Zeichengeräte sind Zeichenschablonen im Handel erhältlich, mit denen häufig vorkommende Figuren, Kurven oder Zeichen, die in transparente Kunststoffplatten gefräst oder gestanzt sind, durch Nachfahren gezeichnet werden. Dabei wird das Zeichenpapier mit Heftzwecken oder anderen Befestigungsmitteln auf einer möglichst ebenen Zeichenunterlage befestigt. Um zu gewährleisten, dass die zu schreibenden Ziffern, Buchstaben und/oder Sonderzeichen exakt in einer Reihe zu stehen kommen, sind Hilfsmittel, wie z.B. Lineale oder Anlegekanten erforderlich, die ihrerseits ausgerichtet und an der Zeichenunterlage befestigt werden. Das deutsche Gebrauchsmuster 77 00 360 beschreibt eine Vorrichtung zum Uebertragen von Symbolen auf eine Schreibunterlage mittels einer Schablone, die als biegsamer, aufrollbarer, endloser Folienstreifen ausgebildet ist. Es werden benötigt: Walzen, Lager, Lagerstützen, Verstell- und Antriebsmittel, Zahnstange, Ritzel, Handrad, Gewindespindel usw.

Aufgabe der Erfindung ist es, ein Schreib- und/oder Zeichengerät der eingangs genannten Art so auszugestalten, dass auf technisch einfachste Weise eine wohldefinierte, sichere Lage sowohl des Zeichnungsträgers als auch der Schablone gewährleistet ist.

Diese Aufgabe wird durch die im Anspruch 1 gekennzeichneten Merkmale gelöst. Weiterbildungen der Erfindung sind in den abhängigen Ansprüchen definiert. Eine vorteilhafte Verwendung des Schreib- und/oder Zeichengerätes ist im Anspruch 11 angegeben.

Ein Vorteil der Erfindung besteht darin, dass im Vergleich zum Bekannten einfachste technische Mittel, die sich auch durch geringfügigen Material- und Arbeitsaufwand auszeichnen, zur Anwendung gelangen.

Die mit Rastlöchern ausgestattete Schablone kann einfach auf passende Rasternasen gesteckt werden, die als Befestigungsmittel von der Grundplatte dieses Schreib- und/oder Zeichengerätes vorstehen. Besonders vorteilhaft ist es, wenn diese Rasternasen und Rastlöcher in gleichmässigen Abständen in einer Reihe oder Zeile angeordnet sind. Dadurch können die Schablonen um gleichmässige Zeilen- und/oder Spaltenabstände verschoben werden. Untereinanderstehende Schriftzeichen lassen sich mit exakt gleichem Abstand schreiben. Vorteilhaft ist die Schablone mit Befestigungsmitteln im Abstand eines Zeichens vom benachbarten Zeichen oder einer Figur von einer benachbarten Figur versehen, so dass das benachbarte Zeichen innerhalb eines Wortes oder benachbarte Figuren beim Nachfahren gleichen Abstand bekommen. Entsprechendes gilt für Wort- und Satzabstände.

Gemäss einer weiteren vorteilhaften Ausgestaltung der Erfindung ist die Zeichenschablone als Schablonenrahmen mit Befestigungsmitteln für aufsteckbare Schablonenplättchen oder Zeichenelemente ausgeführt. Dabei können die Zeichenelemente in beliebiger Reihenfolge, z.B. in einer Satz- oder Musterfolge auf der Schablone angeordnet werden.

Ist der Durchmesser der Spitze des Zeichenstiftes kleiner als die Führungsbreite der Schablonenzeichen, so kann der Zeichenstift längs der einen oder anderen Kante des Zeichens oder ohne Führung im Zwischenraum zwischen beiden Kanten bewegt werden, was zu ungleichmässigen Schrift- und Zeichenbildern sowie Abständen führt. Dies wird gemäss einer weiteren vorteilhaften Ausgestaltung der Erfindung durch Verwendung einer zur Schreib- und/oder Zeichenschablone passenden Halterung für einen Schreib- und/oder Zeichenstift vermieden. Diese Halterung weist zweckmässigerweise einen in die Schablonenzeichen eingreifenden Gleitzylinder auf, dessen Durchmesser zur Breite der Schablonenaussparungen passt. Zum Andrücken und Befestigen des Schreib- und/oder Zeichenstiftes in der Halterung wird diese längs des Halteteils mit Oeffnungen oder Längsschlitzen versehen, die ein Einspannen des Stiftes ermöglichen. Dieses Halteteil kann eine vorgebbare Neigung zur Gleitfläche der Halterung bzw. zum Zeichenpapier aufweisen, um eine natürliche Schreibstellung zu ermöglichen bzw. ein das Schreiben lernendes Kind an eine anatomisch bequeme Schreibstellung zu gewöhnen. Um eine gleichmässige Führung des Stiftes in einem Schablonenzeichen auch bei unterschiedlichen Neigungen dieses Stiftes mit nur einem Zeichenstifthälter zu gewährleisten, ist es zweckmässig, die Halterung mit einem drehbaren Gleitkopf in Form einer Gleitkugel auszustatten. Besonders vorteilhaft ist dies für geübtere Benutzer, die sich bereits an eine Vorzugsneigung des Stiftes gewöhnt haben.

Die Erfindung wird nachstehend anhand von Ausführungsbeispielen erläutert. Es zeigen:

Fig.1 eine Grundplatte eines Schreib- und/oder Zeichengerätes mit Befestigungsmitteln und drei z.T. ausschnittsweise angedeuteten Schablonen in Draufsicht,

Fig.2 eine Grundplatte nach Fig.1 mit eingelegtem Zeichenpapier im Querschnitt,

Fig.3 eine Zeichenschablone mit aufgesteckten Zeichenelementen ausschnittsweise in Draufsicht,

Fig.4 einen Zeichenstifthalter mit perspektivisch dargestelltem Zeichenstift in Schräglage zum Zeichnungsträger im Querschnitt,

Fig.5 einen Zeichenstifthalter mit perspektivisch dargestelltem Zeichenstift in rechtwinkliger Lage zum Zeichnungsträger im Querschnitt,

Fig.6 den Querschnitt eines Zeichenstifthalters mit einer Gleitkugel, die in einem Gleitelement drehbar gelagert ist, sowie einen perspektivisch dargestellten Zeichenstift,

Fig.7 den Querschnitt eines Zeichenstifthalters mit einer in die Aussparung eines Schablonenzeichens passenden Gleitkugel, jedoch ohne Gleitelement, sowie einen perspektivisch dargestellten Zeichenstift.

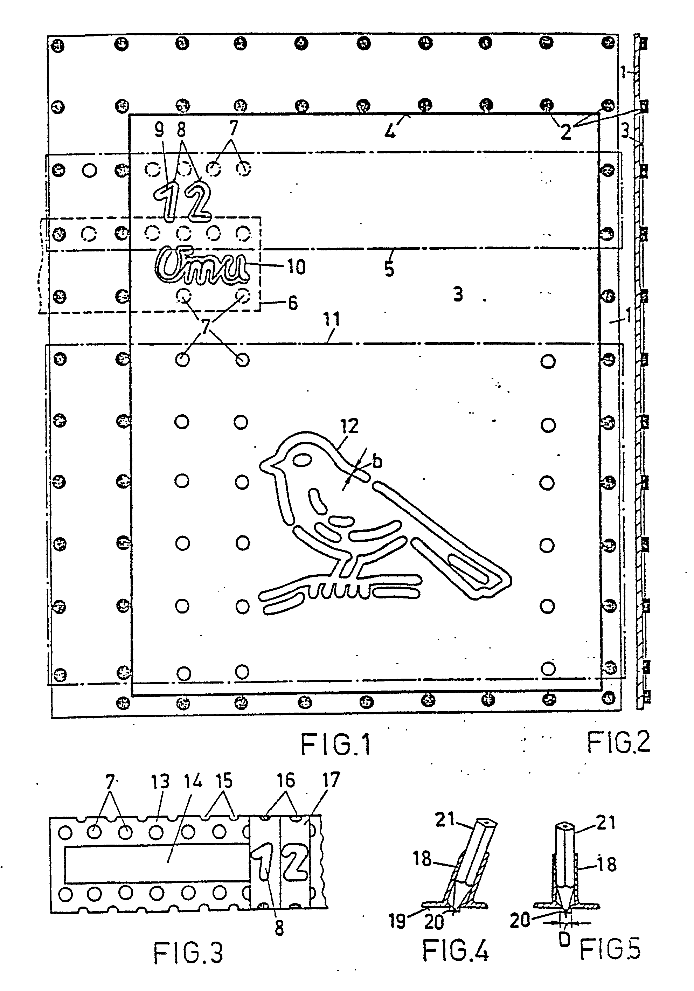

Das Schreib- und/oder Zeichengerät weist gemäss Fig.1 eine in Rechteckform ausgeführte Grundplatte 1 mit in zueinander parallelen, waagerechten Zeilen und zueinander parallelen, senkrechten Reihen angeordneten Rasternasen 2 auf, wobei Reihen und Zeilen senkrecht zueinander stehen. Die Unterseite der Grundplatte hat eine rauhe Oberfläche, damit sie z.B. auf einem Tisch oder auf einer schrägen Unterlage verschiebefest gelagert werden kann; diese Unterseite könnte auch glatt und mit Saugnäpfen versehen sein. Die Rasternasen 2 sind als Kreiszylinder ausgeführt und ragen, wie Fig.2 zeigt, aus der Oberseite der Grundplatte 1 über die Dicke eines eingelegten Zeichnungsträgers bzw. Zeichenpapiers 3 vor. Der Rand 4 des Zeichenpapiers 3 vorgebbarer Blattgrösse ist unmittelbar angrenzend von diesen Rasternasen 2 umgeben. Dadurch ist das Zeichenpapier ortsfest auf der Unterlage 1 gehalten bzw. festgelegt. Zum Schreib- und/oder Zeichengerät gehört ferner eine Schreibschablone 5 mit kreisförmigen, zu den Rasternasen im Durchmesser passenden Rastlöchern 7, wie es im oberen Teil von Fig.1 ausschnittsweise strichpunktiert dargestellt ist. Dabei liegt die Schreibschablone 5 in einer solchen Position auf der Grundplatte 1 auf, dass mindestens zwei Rasternasen 2 in passende Rastlöcher 7 eingreifen und somit die Schablone in ortsfester Lage auf der Grundplatte arretiert ist. Im dargestellten Beispiel sind 6 Rasternasen im Eingriff. Die Rastlöcher sind in zwei zueinander parallelen Zeilen angeordnet. Der Abstand benachbarter Rasternasen 2 kann ein ganzzahliges Vielfaches des Zeichenabstandes sein; im dargestellten Fall ist er doppelt so gross wie der Zeichenabstand. Die Schreibschablone 5 weist Schablonenzeichen 8 auf. Durch Nachfahren mit einem Schreib- bzw. Zeichenstift 21, vgl. Figuren 4 bis 7, entsteht auf dem Zeichenpapier 3 ein nachgezogenes Zeichen 9.

Anstelle der Schablone 5 mit Ziffern und nicht dargestellten Buchstaben sowie Sonderzeichen kann auch eine Schreibschablone 6 mit Wörtern oder Sätzen, z.B. in Schulschrift, verwendet werden, wie es in Fig.1 gestrichelt angedeutet ist. Dabei sind zwischen den einzelnen Buchstaben Verbindungen vorgesehen, um ein Fliessschreiben mit stückweiser Rückführung des Schreibstiftes üben zu können.

Eine andere Bildzeichen-Schablone 11 mit einem Bildzeichen 12 ermöglicht zeichnerische Darstellungen. Infolge der in mehreren Reihen angebrachten Rastlöcher 7 kann das Bildzeichen 12 über unterschiedlichen Stellen des Zeichenpapiers 3 arretiert werden.

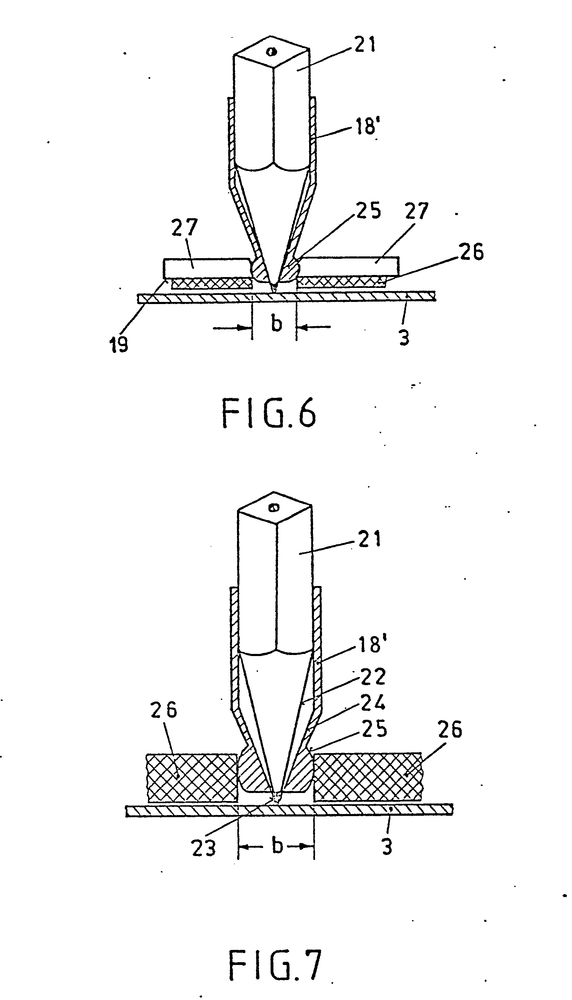

Ein hoher Grad an Flexibilität hinsichtlich der Anordnung von Schablonenzeichen z.B. zu Wörtern lässt sich mit einer Zeichenschablone bzw. einem ausschnittsweise in Fig.3 dargestellten Schablonenrahmen 13 erreichen, mit einer Aussparung 14 für Schablonenzeichen 8. Der Schablonenrahmen weist Befestigungsmittel bzw. Rastöffnungen 15 zur Befestigung von aufsteckbaren Schablonenplättchen bzw. Zeichenelementen 17 auf. An den Zeichenelementen 17 sind Raststifte 16 angeordnet, welche vorzugsweise unter Ueberwindung einer geringen elastischen Spannung in diese Rastöffnungen 15 einführbar sind. Zur Gewährleistung einer gleichmässigen Führung des Zeichenstiftes 21 innerhalb der Aussparungen für die Schablonenzeichen ist ein Adapter bzw. Zeichenstifthalter 18 mit einer ebenen Gleitfläche 19 zur Auflage auf der Schablone und einem Gleitzylinder 20, der nach unten aus dieser Gleitfläche herausragt, vorgesehen, vgl. Fig.4 und 5. Der Durchmesser D dieses Gleitzylinders 20 ist geringfügig kleiner als die Breite b (Fig.1) der Zeichenaussparungen in den Schablonen, so dass der Gleitzylinder in diese Aussparungen eingreifen kann und eine sichere Führung des Stiftes 21 gewährleistet ist. Der Schaft des Zeichenstifthalters weist zwei nicht dargestellte seitliche Oeffnungen bzw. Schlitze auf, die ein Andrücken des Schreibstiftes im Zeichenstifthalter ermöglichen. Der Zeichenstifthalter 18 besteht vorzugsweise aus einem transparenten, elastischen Werkstoff. Das Halteteil für den Zeichenstift 21 kann mit einer vorgebbaren Neigung zur Gleitfläche 19 ausgeführt sein, entsprechend einer anatomisch bedingten, bequemen Schreibstellung der Hand, oder rechtwinklig zur Gleitfläche, insbesondere für figürliche Darstellungen.

Der in Fig.6 dargestellte Zeichenstifthalter 18' weist einen kugelförmigen Kopf bzw. eine Gleitkugel 25 auf, die in einem Gleitelement 27 mit einer ebenen Gleitfläche 19 drehbar gelagert ist. Der Schaft des Zeichenstifthalters 18' ist mit zwei nicht dargestellten seitlichen Schlitzen oder einer oder mehreren Oeffnungen zum Festklemmen bzw. Andrücken des Zeichenstiftes 21 im Zeichenstifthalter ausgestattet. Eine wahlfreie Richtung bzw. Neigung des Zeichenstiftes 21 zum Zeichnungsträger 3 in einem Winkelbereich von etwa 45° bezüglich der senkrechten Richtung des Zeichenstiftes zum Zeichnungsträger ist durch die drehbare Lagerung des kugelförmigen Kopfes 25 in einer entsprechenden kugelförmigen Aussparung im Gleitelement 27 gewährleistet. Die Gleitkugel 25, die in ihrem zentralen Teil eine kegelförmige Aussparung zur Aufnahme der Zeichenstiftspitze aufweist, ragt teilweise in die Zeichen- bzw. Bildaussparung des Schablonenabschnittes 26 hinein, so dass eine sichere Führung des Zeichenstiftes in dieser Aussparung gewährleistet ist.

In Fig.7 ist der Kegelmantel des Zeichenstifthalters mit 24 und der Kegel der Zeichenstiftspitze mit 22 bezeichnet. Eine wahlfreie Neigung des Zeichenstiftes 21 lässt sich hier ohne Gleitelement erreichen. Dabei ist die Gleitkugel 25 in der Zeichenaussparung des Schablonenabschnitts 26 drehbar gelagert. Der Durchmesser der Gleitkugel ist etwa gleich der Breite b. Die Spitze der Zeichenstiftmine 23 ragt aus der Gleitkugel vor und ist zweckmässigerweise etwas abgestumpft, um eine bessere Gleichmässigkeit beim Schreiben oder Zeichnen zu erreichen. Der Kegel des Kegelmantels 24 des Zeichenstifthalters 18' ist ausreichend gross gehalten, damit Zeichenstifte 21 mit unterschiedlichem Kegelwinkel einsetzbar sind.

Das Schreib- und/oder Zeichengerät eignet sich besonders für Kinder im Vorschulalter als Lernspielgerät sowie für Kindergärten und Sonderschuleinrichtungen als Lernhilfe. Bildliche Darstellungen können kombiniert, Wörter und Sätze gebildet und die Phantasie eines Kindes zu flächenhaftem Gestalten angeregt werden.

Mittels des Zeichenstifthalters kann das Kind in einer anatomisch-natürlichen Stellung Buchstaben, Wörter und Sätze in Schablonen nachfahren und so spielerisch das spätere freie Schreiben einüben.

Die Erfindung ist selbstverständlich auf das in den Ausführungsbeispielen Dargestellte nicht beschränkt. So könnten die Grundplatte 1 und das Zeichenpapier 3 eine von der Rechteckform abweichende, z.B. dreieckige Gestalt haben. Die Rasternasen könnten statt eines kreisförmigen z.B. einen quadratischen, dreieckförmigen oder T-förmigen Querschnitt aufweisen und die Rastlöcher 7 entsprechend geformt sein. Magnet- und Klettenverbindungen sind ebenfalls als Befestigungsmittel geeignet. Wichtig ist, dass die Befestigungsmittel direkt an der Unterlage 1 und an Schablonen sowie Zeichenelementen angebracht sind. Anstelle von Zeichenpapier kann z.B. Kunststofffolie oder eine Schiefertafel verwendet werden. Der Werkstoff des Zeichenstiftes bzw. einer zum Nachfahren verwendeten Zeichenmine muss selbstverständlich dem Werkstoff des Zeichnungsträgers angepasst sein.

Bezeichnungsliste
1 Grundplatte
2 Befestigungsmittel, Positions- bzw. Rasternase
3 Zeichenpapier, Zeichnungsträger
4 Zeichenpapier-Rand
5,6 Schreibschablonen
7 Befestigungsmittel, Rastloch
8 Schablonenzeichen
9 Nachgezogenes Zeichen
10 Fliessschrift, Wortzeichen
11 Bildzeichen-Schablone
12 Bildzeichen
13 Schablonenrahmen bzw. Zeichenschablone
14 Aussparung
15 Rastöffnung
16 Raststift
17 Schablonenplättchen bzw. Zeichenelement
18, 18' Adapter, Zeichenstifthalter
19 Gleitfläche
20 Gleitzylinder
21 Schreib- bzw. Zeichenstift
22 Kegel der Zeichenstiftspitze
23 Zeichenstiftmine
24 Kegelmantel von 18'
25 Kugelförmiger Kopf von 18' bzw. Gleitkugel
26 Schablonenabschnitt
27 Gleitelement
b Breite der Schablonenaussparungen
D Durchmesser des Gleitzylinders

**Patentansprüche**

1. Schreib- und/oder Zeichengerät
a) mit einer Grundplatte (1) zur Auflage eines zu beschriftenden Zeichenträgers (3) und
b) mit mindestens einer Schablone (5,6,11,13),
c) wobei die Grundplatte (1) Befestigungsmittel (2) für die Schablone aufweist, welche Befestigungsmittel im Querschnitt mit Befestigungsmitteln (7) korrespondieren, die an der Schablone angebracht sind, dadurch gekennzeichnet,
d) dass die an der Grundplatte (1) vorgesehenen Befestigungsmittel Rasternasen (2) sind, die von der Grundplatte vorstehen, und
e) dass Rasternasen (2) längs des Aussenrandes des zu beschriftenden Zeichenträgers (3) angeordnet sind, derart, dass der Zeichenträger durch diese Rasternasen begrenzt und festgelegt ist.

2. Gerät nach Anspruch 1, dadurch gekennzeichnet, dass die Rasternasen (2) für die Schreib- und/oder Zeichenschablone (5,6,11,13) mindestens eiszeilig und oder mindestens einreihig in gleichmässigem Abstand zueinander angeordnet sind und dass die Schreib- und/oder Zeichenschablone (5,6,11,13) mindestens eine Reihe von Rastlöchern (7) zur Aufnahme der Rasternasen (2) aufweist.

3. Gerät nach Anspruch 1 dadurch gekennzeichnet, dass die Schreib- und/oder Zeichenschablone (13) Befestigungsmittel (15) für Zeichenelemente (17) aufweist.

4. Gerät nach Anspruch 1, dadurch gekennzeichnet, dass zur Schreib- und/oder Zeichenschablone (5,6,11,13) passende Halterungen (18, 18') für einen Schreibund/oder Zeichenstift (21) vorgesehen sind.

5. Gerät nach Anspruch 4, dadurch gekennzeichnet, dass die Halterung (18) für den Schreib- und/oder Zeichenstift (21) einen unterhalb einer Gleitfläche (19) vorstehenden Gleitzylinder (20) zum passenden Eingriff in ein Schablonenzeichen (8, 12) aufweist.

6. Gerät nach Anspruch 4, dadurch gekennzeichnet, dass die Halterung (18) mindestens eine Oeffnung bzw. mindestens einen Längsschlitz zum Andrücken des Schreibund/oder Zeichenstiftes (21) aufweist.

7. Gerät nach Anspruch 4, dadurch gekennzeichnet, dass die Halterung (18') mit einem drehbaren Gleitkopf (25) zum wenigstens teilweisen Eingriff in eine Aussparung eines Schablonenabschnitts (26) ausgestattet ist.

8. Gerät nach Anspruch 7, dadurch gekennzeichnet, dass der drehbare Gleitkopf ein kugelförmiger Kopf bzw. eine Gleitkugel (25) ist.

9. Gerät nach Anspruch 7, dadurch gekennzeichnet, dass der drehbare Gleitkopf in einem Gleitelement (27) gelagert ist und zum Eingriff in einen Schablonenabschnitt (26) teilweise unterhalb einer Gleitfläche (19) des Gleitelements (27) vorsteht.

10. Gerät nach Anspruch 4, dadurch gekennzeichnet, dass die Halterung (18') einen Kegelmantel (24) aufweist, dessen Winkel vom Winkel des Zeichenstiftkegels (22) abweicht.

11. Verwendung eines Gerätes nach den Ansprüchen 1 und 4 als Spielzeug, insbesondere zur Vorschulerziehung von Kindern und als Lernhilfe für Sonderschulen.


**Claims**

1. Writing and/or drawing instrument with
a) a baseplate (1) for supporting a drawing carrier (3) to be inscribed, and
b) with at least one stencil (5,6,11,13),
c) the baseplate (1) having fastening means (2) for the stencil, these fastening means having a cross-section corresponding to that of fastening means (7) attached to the stencil,
characterised in that
d) the fastening means provided on the baseplate (1) are grid studs (2) which project from the baseplate, and
e) grid studs (2) are arranged along the outer edge of the drawing carrier (3) to be inscribed, in such a way that the drawing carrier is limited and fixed by these grid studs.

2. Instrument according to Claim 1, characterised in that the grid studs (2) for the writing and/or drawing stencil (5,6,11,13) are arranged in at least one line and/ or in at least one row at a uniform distance from one another, and in that the writing and/or drawing stencil (5,6,11,13) has at least one row of engaging holes (7) for receiving the grid studs (2).

3. Instrument according to Claim 1, characterised in that the writing and/or drawing stencil (13) has fastening means (15) for drawing elements (17).

4. Instrument according to Claim 1, characterised in that holders (18,18') fitting the writing and/or drawing stencil (5,6,17,13) are provided for a writing and/or drawing pencil (21).

5. Instrument accordiing to Claim,4 characterised in that the holder (18) for the writing and/or drawing pencil (21) has a sliding cylinder (20) projecting below a sliding surface (19) and intended for fitting by engagement into a stencil symbol (8,12).

6. Instrument according to Claim 4, characterised in that the holder (18) has at least one orifice or at least one longitudinal slot for pressing down the writing and/or drawing pencil (21).

7. Instrument according to Claim 4, characterised in that the holder (18') is equipped with a rotatable sliding head (25) for at least partial engagement in a recess in a stencil portion (26).

8. Instrument according to Claim 7, characterised in that the rotatable sliding head is a spherical head or a sliding ball (25).

9. Instrument according to Claim 7, characterised in that the rotatable sliding head is mounted in a sliding element (27) and projects partially below a sliding surface (19) of the sliding element (27) for engagement in a stencil portion (26).

10. Instrument according to Claim 4, characterised in that the holder (18') has a conical shell (24), the angle of which differs from the angle of the drawing pencil cone (22).

11. Use of an instrument according to Claims 1 and 4 as a toy, especially for the pre-school education of children and as a learning aid for special schools.


**Revendications**

1.- Dispositif pour l'écriture et/ou le dessin comportant:
a) une plaque de base (1) sur laquelle s'applique un support à dessin (3) apte à recevoir des inscriptions, et
b) au moins un normographe (5, 6, 11, 13),
c) la plaque de base (1) comportant des moyens de fixation (2) pour le normographe, qui correspondent, en coupe, à des moyens de fixation prévus sur le normographe,
caractérisé en ce que,
d) les moyens de fixation prévus sur la plaque de base (1) sont des tenons (2) disposés selon un quadrillage et faisant saillie sur la plaque de base, et

e) des tenons de quadrillage (2) sont disposés le long du bord extérieur du support à dessin (3) apte à recevoir des inscriptions d'une manière telle que le support à dessin soit délimité et fixé par ces tenons de quadrillage.

2.- Dispositif suivant la revendication 1, caractérisé en ce que les tenons de quadrillage (2) pour le normographe prgvu pour l'écriture et/ou le dessin (5, 6, 11, 13) sont disposés au moins sur une seule ligne et/ou au moins en une seule rangée a égale distance les uns des autres et le normographe prévu pour l'écriture et/ou pour le dessin (5, 6, 11, 13) présente au moins une rangée de perforations d'arrêt (7) destinée à recevoir les tenons de quadrillage (2).

3.- Dispositif suivant la revendication 1, caractérisé en ce que le normographe (13) prévu pour l'écriture et/ou pour le dessin comporte des moyens de fixation (15) pour des éléments à dessiner (17).

4.- Dispositif suivant la revendication 1, caractérisé en ce que des supports (18, 18') adaptés au normographe prévu pour l'écriture et/ou le dessin (5, 6, 11, 13) sont prévus pour un instrument d'écriture et/ou de dessin (21).

5.- Dispositif suivant la revendication 4, caractérisé en ce que le support (18) pour l'instrument d'écriture et/ou de dessin (21) comporte un cylindre de glissement (20) qui fait saillie en dessous d'une surface de glissement (19) en vue de s'engager d'une manière bien ajustée dans un signe (8, 12) du normographe.

6.- Dispositif suivant la revendication 4, caractérisé en ce que le support (18) comporte au moins une ouverture ou au moins une fente longitudinale pour presser l'instrument d'écriture et/ou de dessin (21).

7.- Dispositif suivant la revendication 4, caractérisé en ce que le support (18') est pourvu d'une tête de glissement tournante (27) destinée à être engagée au moins partiellement dans un évidement d'une section de normographe (26).

8.- Dispositif suivant la revendication 7, caractérisé en ce que la téte de glissement tournante est une tête sphérique ou une rotule de glissement (25).

9.- Dispositif suivant la revendication 7, caractérisé en ce que la téte de glissement tournante est montée dans un élément coulissant (27) et fait saillie de manière à s'engager dans une section de normographe (26) partiellement en dessous d'une surface de glissement (19) de l'élément coulissant (27).

10.- Dispositif suivant la revendication 4, caractérisé en ce que le support (18') présente une enveloppe conique (24) dont l'angle diffère de celui du cône de l'instrument de dessin (22).

11.- Utilisation d'un dispositif suivant les revendications 1 et 4, à titre de jouet, en particulier pour l'éducation préscolaire des enfants, et à titre d'instrument didactique pour des écoles spéciales.

FIG.1    FIG.2

FIG.3    FIG.4    FIG.5

FIG.6

FIG.7